# EUROPEAN PATENT APPLICATION

(11) **EP 1 860 534 A1**
(43) Date of publication of application: **28.11.2007**
(21) Application number: 07009696.1
(22) Date of filing: 15.05.2007
(51) Int. Cl.: G06F 3/048, H04M 1/247

(54) **Mobile terminal and menu display method thereof**

(30) Priority: 22.05.2006 KR 20060045890; 22.11.2006 KR 20060116074
(71) Applicant: LG Electronics Inc., Yongdungpo-gu Seoul 150-010 (KR)
(72) Inventor: Park, Jun-Sic c/o LG Electronics Inc., Intellec. Prop. Center, Geumcheon-Gu Seoul (KR); Kim, Kyung-Lack, Seoul (KR)
(74) Representative: Katérle, Axel

(57) **Abstract**

A mobile terminal and a menu display method thereof, comprising: one or more bodies; an input unit provided at one of the bodies; and a display unit that displays a menu list having a plurality of menus and rotates the menu list by a signal generated by the input unit, in which a menu selection for using a function stored in the mobile terminal and its use can be facilitated.

## Description

### RELATED APPLICATION

The present disclosure relates to subject matter contained in priority Korean Patent Application No. 10-2006-0045890, filed on May 22, 2006, and Korean Patent Application No. 10-2006-0116074, filed on November 22, 2006, which are herein expressly incorporated by reference in its entirety.

### BACKGROUND

The present disclosure relates to a mobile terminal and a menu display method thereof.

In general, a mobile terminal has features beyond voice communication capabilities - including the sending of text messages, voice memo recording, phone book management, alarm clock features, playing games, multimedia functions and information scheduling.

Some related art mobile terminals are configured to display menu lists on the display screen such that a user may select a desired function from various functions on a menu list. The related art menu functions are typically displayed in the form of a bar-type list or a matrix-type list, and menu navigation needs to be performed by pressing different types of buttons. However, all menu items cannot be shown on the display area at one time due to the limited amount of space on the screen. Besides, if sub-menus are to be displayed, the main menu items are not shown due to the lack of space on the screen, thus causing inconvenience to the user.

Another related art menu display method shows the main menu together with some sub-menus associated therewith. For example, the mobile phone may have two separate displays screens, with one screen showing the main menu items, and the other screen showing the sub-menu items. The user may view both screens simultaneously, but menu navigation should be done separately for each screen. Namely, the main menu and the sub-menus are separately shown far apart from each other. As such, the user needs to view different portions of the screen to select an appropriate menu item, which increases eye fatigue, requires more concentration, and requires more hand-eye coordination.

Accordingly, there is a need for a mobile terminal that allows more convenient selection of various menu items. Namely, a more intuitive and user friendly graphical user interface (GUI) would be desirable.

### BRIEF DESCRIPTION

The present inventors recognized at least the above-described drawbacks of the related art. Based upon such recognition, the features described hereafter have been conceived.

Therefore, in consideration of the need, an object of the present invention is not to cause change in a user's sight when the user selects a menu to use a function thereof.

It is another object of the present invention to facilitate menu selection.

It is another object of the present invention to prevent the lowering of concentration at the time of menu selection.

It is another object of the present invention to reduce eye fatigue for a user.

It is another object of the present invention to display information about both an upper menu and a sub-menu associated with the upper menu.

It is another object of the present invention to facilitate checking a selected menu by displaying information about the selected menu on a menu display area.

To achieve these and other advantages and in accordance with the purpose of the present invention, as embodied and broadly described herein, there is provided a mobile terminal having a rotation-type menu display unit and a controlling method thereof.

The mobile terminal according to one embodiment of the present invention may include one or more bodies; an input unit provided at one of the bodies; and a display unit that displays a menu list having a plurality of menus and rotates the menu list by a signal generated by the input unit.

According to another embodiment of the present invention, there is provided a mobile terminal, including: one or more bodies; an input unit provided at one of the bodies; and a display unit that displays a menu list having a plurality of menus, displays a cursor or an activated-state displaying portion on the menu list so as to select one menu from the menu list, and rotates the cursor or the activated-state displaying portion along the menu list by a signal generated by the input unit.

According to another embodiment of the present invention, there is provided a mobile terminal, including: one or more bodies; an input unit provided at one of the bodies; and a display unit that outputs information, wherein the display unit includes a first menu display area that arranges first menus, and rotates the first menus by a signal generated by the input unit so as to select one of the first menus; and a second menu display area that displays second menus associated with the menu selected among the first menus, and rotates the second menus by a signal generated by the input unit so as to select one of the second menus.

According to another embodiment of the present invention, there is provided a mobile terminal, comprising: one or more bodies; an input unit provided at one of the bodies; and a display unit that outputs information, wherein the display unit includes a first menu display area that arranges first menus, displays a cursor or an activated-state displaying portion on the first menus so as to select one of the first menus, and rotates the cursor or the activated-state displaying portion along the first menus by a signal generated by the input unit; and a second menu display area that displays second menus associated with the menu selected among the first menus, displays the cursor or the activated-state displaying portion on the first menus so as to select one of the second menus, and rotates the cursor or the activated-state displaying portion along the second menus by a signal generated by the input unit.

Herein, the display unit is further provided with a selected menu display area for outputting information about the menu selected from the menu list. And, one menu among the menu list can be selected by a cursor, an activated-state displaying portion, or an indicator which is disposed in a fixed location.

Further, menus listed on the menu list can be divided by a menu separator. And, an indicator can be provided for selecting a menu from the menu list. The indicator can be displayed by being rotated or bent with a certain angle in a rotational direction of the menu list by the menu separator.

Information displayed on the selected menu display area may be implemented as an icon and/or a text for indicating a menu selected from the menu list. Also, the icon and/or the text may be displayed by being overlaid with the selected menu display area.

When one menu is selected from the menu list, the display unit can further display second menus as sub-menus associated with the selected menu, and the second menus can be rotated so as to select one of the second menus.

The display unit may be further provided with a selected menu display area for outputting information about a menu selected from the second menus. And, a cursor, an activated-state displaying portion, or an indicator which is disposed in a fixed location may be further provided so as to select the second menus.

Further, the second menus can be divided by a menu separator. An indicator which is extended to the location of the second menus can be provided when the second menus are arranged. And the indicator may be displayed by being rotated or bent with a certain angle in a rotational direction of the second menus by the menu separator.

Meanwhile, the display unit may be provided with a selected menu display area for outputting information about a menu selected from the first menus and/or the second menus.

According to another embodiment of the present invention, there is provided a menu display method of a mobile terminal, including: operating a mode for a menu selection by rotating a menu list based on an input signal generated by an input unit; selecting a menu from the menu list; displaying information about the selected menu on a selected menu display area; and executing the selected menu.

According to another embodiment of the present invention, there is provided a menu display method of a mobile terminal, including: operating a mode for a menu selection by rotating a cursor or an activated-state displaying portion along a menu list based on an input signal generated by an input unit; selecting a menu from the menu list; displaying information about the selected menu on a selected menu display area; and executing the selected menu.

According to another embodiment of the present invention, there is provided a menu display method of a mobile terminal, including: selecting one of first menus by rotating the first menus based on an input signal generated by an input unit; executing the selected menu; selecting one of second menus by rotating the second menus, as submenus associated with the executed first menu; and executing the selected second menu.

According to another embodiment of the present invention, there is provided a menu display method of a mobile terminal, including: selecting one of first menus by rotating a cursor or an activated-state displaying portion along the first menus based on an input signal generated by an input unit; executing the selected first menu; selecting one of second menus by rotating the cursor or the activated-state displaying portion along the second menus, as submenus associated with the selected first menu; and executing the selected second menu.

Herein, the selecting a menu includes checking whether an input signal for a menu selection is generated or not; and selecting a menu by rotating the menu list by the input signal.

Further, the selecting a menu includes detecting an operating key which has generated an input signal to the input unit; and selecting a menu by rotating the menu list based on a signal generated by the detected operating key.

Further, the selecting a menu includes checking whether an input signal for a menu selection is generated or not; and selecting a menu by rotating the cursor or the activated-state displaying portion along the menu list by the input signal.

Further, the selecting a menu includes detecting an operating key which has generated an input signal to the input unit; and selecting a menu by rotating the cursor or the activated-state displaying portion along the menu list based on a signal generated by the detected operating key.

Meanwhile, the selecting a first menu or a second menu includes checking whether an input signal for a menu selection is generated or not; and selecting a menu by rotating the first menus or the second menus by the input signal.

And, it may further include the outputting information about the selected first menu and/or the second menu on a selected menu display area.

Meanwhile, the selecting a first menu or a second menu includes checking whether an input signal for a menu selection is generated or not; and selecting a menu by rotating the cursor or the activated-state displaying portion along the first menus or the second menus by the input signal.

In addition, the selecting a first menu includes detecting an operating key that has generated an input signal to the input unit; and selecting a first menu by rotating the cursor or the activated-state displaying portion along the first menus based on the signal generated by the detected operating key.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1A schematically illustrates the entire configuration of a mobile terminal having a rotation-type menu display unit according to an exemplary embodiment;
Figure 1 B schematically illustrates the entire configuration of another mobile terminal having a rotation-type menu display unit according to an exemplary embodiment;
Figure 2 is a block diagram schematically illustrating the configuration of a mobile terminal having a rotation-type menu display unit according to an exemplary embodiment;
Figure 3 schematically illustrates the configuration of a rotation-type menu display unit according to an exemplary embodiment;
Figure 4 schematically illustrates the configuration of a rotation-type menu display unit according to an exemplary embodiment;
Figures 5A through 5H illustrate a state that a menu list displayed on the rotation-type menu display unit that is configured by the embodiments shown in Figs. 2 through 4 is controlled by a manipulation of an input unit;
Figure 6 schematically illustrates the configuration of a rotation-type menu display unit according to an exemplary embodiment;
Figure 7A schematically illustrates the configuration of a rotation-type menu display unit according to an exemplary embodiment;
Figure 7B schematically illustrates the configuration of a rotation-type menu display unit according to a modification of the embodiment shown in Fig. 7A;
Figure 8A schematically illustrates the configuration of a rotation-type menu display unit according to an exemplary embodiment;
Figure 8B schematically illustrates the configuration of a rotation-type menu display unit according to a modification of the embodiment shown in Fig. 8A;
Figure 9A is a flowchart illustrating the method for controlling a rotation-type menu according to an exemplary embodiment;
Figure 9B is a flowchart illustrating the modification of the embodiment shown in Fig. 9A;
Figure 10A is a flowchart illustrating one embodiment of the method for controlling a rotation-type menu on a first menu display area;
Figure 10B is a flowchart illustrating the modified embodiment of the method for controlling a rotation-type menu on a first menu display area; and
Figure 11 is a flowchart illustrating the method for controlling a rotation-type menu on a second menu display area.

### DETAILED DESCRIPTION

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

Reference will now be made in detail to some exemplary embodiments of the present disclosure, examples of which are illustrated in the accompanying drawings. The same reference numerals for relevant components having the same function in each embodiment will be used throughout the drawings to refer to the same or like parts.

The following description of the exemplary embodiments will now be given in detail of a rotation-type menu on a display unit. In the rotation-type menu, menus arranged on a menu display area may rotate or a cursor (or an activated-state displaying portion) for selecting menus arranged on the menu display area may rotate. Here, the "rotation-type menu" is merely an exemplary term that refers to various types of circular (annular or ring-like) layouts for menu items that allow a more user friendly graphical user interface (GUI) for menu navigation.

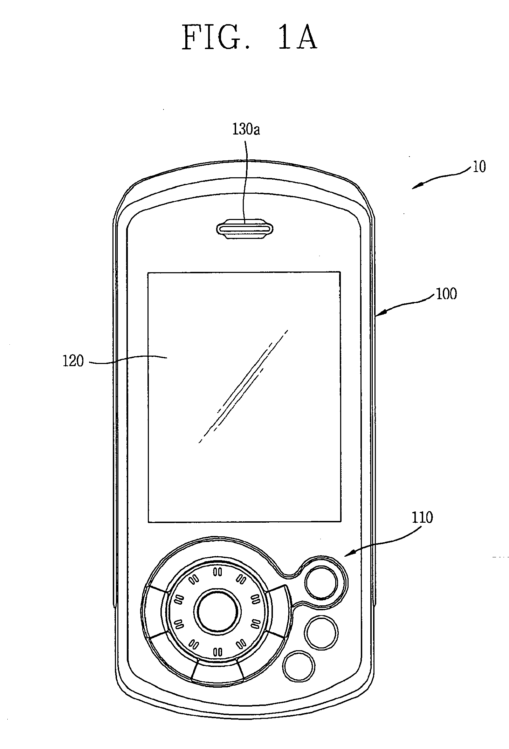

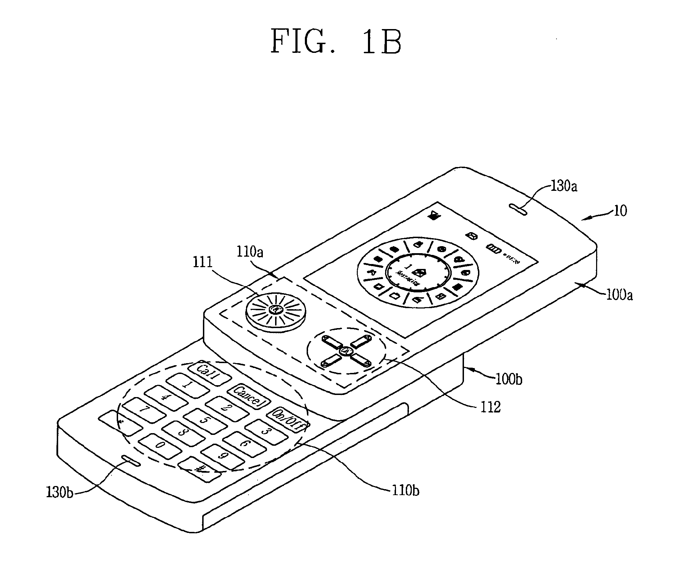

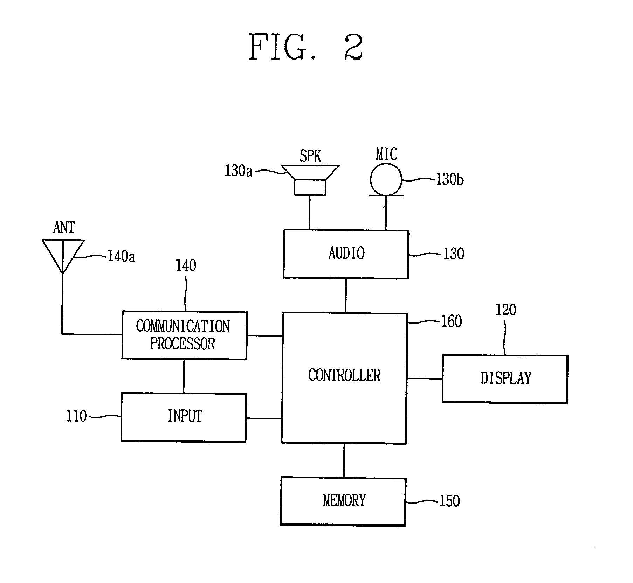

Figures 1A and 1B illustrate a mobile terminal according to an exemplary embodiment. And Figure 2 is a block diagram showing an exemplary configuration of the mobile terminal 10.

The mobile terminal 10 (e.g., a mobile phone, wireless communication terminal, etc.) may include a control unit 160 (e.g., a microprocessor, controller, etc.) for controlling functions of the mobile terminal 10 in the inside of a body 100, an input unit 110 (e.g., a keypad, function keys, buttons, touch-sensitive screen, etc.) for inputting data, an audio processing unit 130 having an audio output portion 130a (e.g., speaker) and an audio input portion 130b (e.g., microphone), a memory 150 (e.g., an internal storage device, an external memory card, etc.) for storing programs and data to control each function, a communication processing unit 140 (e.g., a radio frequency unit, etc.) having an antenna 140a for communicating with an external device, and a display unit 120 (e.g., an LCD, a flexible screen, a touch screen, etc.) for outputting data of each function.

The memory 150 connected to the control unit 160 may store programs for controlling an output form on each display area of the display unit 120, which will be explained later. The memory 150 may also include a program for controlling a rotating function of a first menu display area 1210 for arranging a first menu 1210a by a signal generated by the input unit 110. In addition, if a sub-menu associated with the first menu 1210a exists, the memory 150 may include a program for controlling a rotating function of a second menu display area 1240 for arranging second menus 1240a ~ 1240h, which are sub-menus. On the other hand, the first menu display area 1210 may display sub-menus, and the second menu display area 1240 may display an upper (or higher level) menu associated with the submenus. Meanwhile, the memory 150 may further include programs for controlling general functions of the mobile terminal.

And, each block shown in Fig. 2 may further include other functions in the same functional block according to the exemplary embodiments. For instance, the input unit 110 may include at least one of a number key 110b, a navigation key 112 and a rotation-type function key 111 as shown in Fig. 1B. Such keys are merely exemplary, as other types of buttons or input devices may also be used.

The rotation-type function key 111 is not limited to the shape shown in Fig. 1 B. That is, the rotation-type function key may be implemented as a jog dial or a wheel (e.g., thumb wheel, rotary button, etc.), which can be rotated (and/or pushed) in various directions. A touch-sensitive key (or element), by which a rotation by a user's finger movement can be detected by simply touching the key without directly rotating it, may also be used.

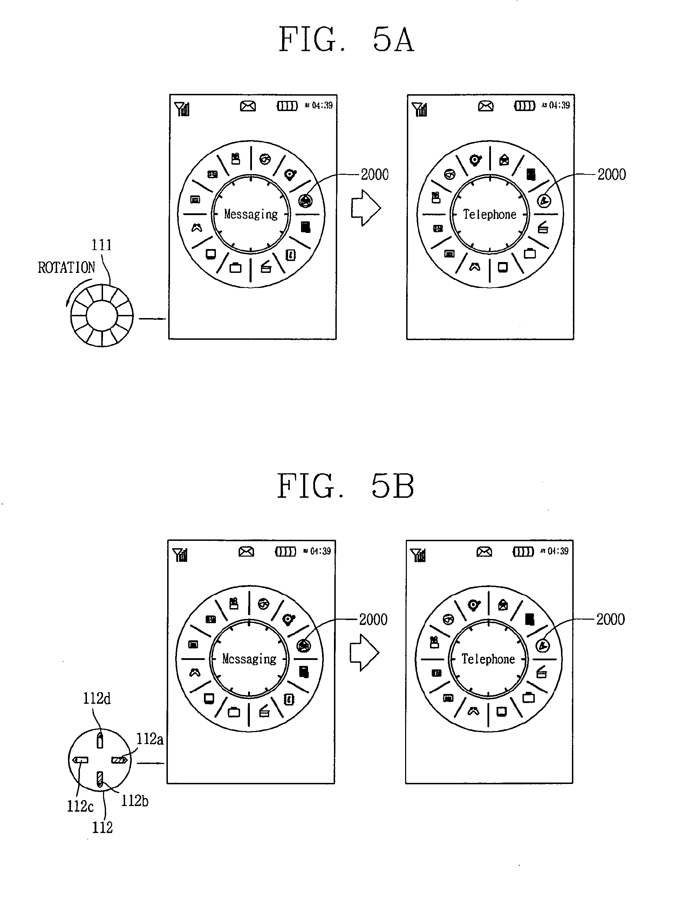

Further, as shown in Figs. 5B, 5D and 5F, the navigation key 112 (having a plurality of direction keys) may be configured to control the rotation of the rotation-type menu based on the number of times that each direction key 112a ~ 112d is pressed.

As mentioned above, the input unit 110 may include various types of input keys or buttons. And, the control unit 160 may be controlled to automatically execute a certain menu which is selected by rotating the rotation-type menu by an input signal generated by the input unit 110 or to execute the certain menu by a signal generated by another execution key (not shown).

Hereinafter, description will be given in detail based on the display unit 120 having only a single main display area 120a or having both a main display area 120a and a sub-display area 120b. However, various other types of embodiments may be implemented without being limited to those described herein. Therefore, the main characteristic of the present disclosure is that the display unit 120 is provided with a display area for displaying the rotation-type menu. In addition, the sub-display area 120b may include information such as the transmitting and/or receiving state of a communication signal, remaining battery capacity, current time, message reception status, etc.

As mentioned above, the rotation-type menu may rotate the menu items arranged on the menu display area, or a cursor 2000 (or an activated-state displaying portion 2000a) that indicates one or more menu items arranged in the menu display area may be moved (rotated) while the menu items are fixed.

The rotation-type menu displayed on the display unit 120 may be formed in a layout (or configuration) having a circular or polygonal shape displayed in a two-dimensional manner or in a three-dimensional manner. Further, the rotation-type menu may include a first menu display area 1210 with first menus 1210a~1210l arranged in a circular (or annular) layout, and a selected menu display area 1220 indicating information about a menu being selected among the first menus 1210a~1210l.

The first menu display area 1210 and the selected menu display area 1220 may be distinctive from each other through graphical effects, such as using a different background color, brightness, etc., or having a boundary line (or other visual indicator) therebetween.

And, the first menus 1210a~1210l may be comprised of a static or dynamic image having a certain size for representing a predetermined function associated with each menu item on the first menu display area 1210. For instance, the images indicating the first menus 1210a~1210l can be an icon, a number, a text, a photo, a character, animation (or images with moving effects), and the like. The graphical images of the first menus 1210a~1210l represent predetermined functions assigned to each menu item.

Depending upon the total number of menu items to be displayed, the size (or other image/graphical characteristics) of each menu item may be adjusted appropriately such that multiple menu items may be shown in an aesthetically pleasing or user-friendly manner. Namely, the size of each menu item may be relatively large when only a small number of total menu items (e.g., 5) are to be displayed, while the size of each menu item may be relatively small when many menu items (e.g., 20) need to be displayed. Alternatively, the same function may be shown in terms of a complicated graphical icon or a simplified graphical icon depending upon how many total menu items need to be shown.

Each level of menu items may be shown to be located along a ring-like or annular portion on the screen. Higher level menu items may be shown along one annular portion, while lower level menu items may be shown along an different annular portion. Each menu item may be shown to be within its own sector of the annular portion.

The entire annular portion having menu items may be rotated or a cursor (or other indicator) may be moved around the annular portion. Such allows the user to scroll through (or move along) the menu items being displayed.

If one of the first menus 1210a~1210l on the first menu display area 1210 is selected by the user, the selected menu display area 1220 may display more detailed information about the predetermined function related to the selected menu. Examples of information displayed on the selected menu display area 1220 can be a text 1220b, a shortcut key 1220c, a static or dynamic image 1220a, and the like. The information may selectively be displayed in any combination thereof.

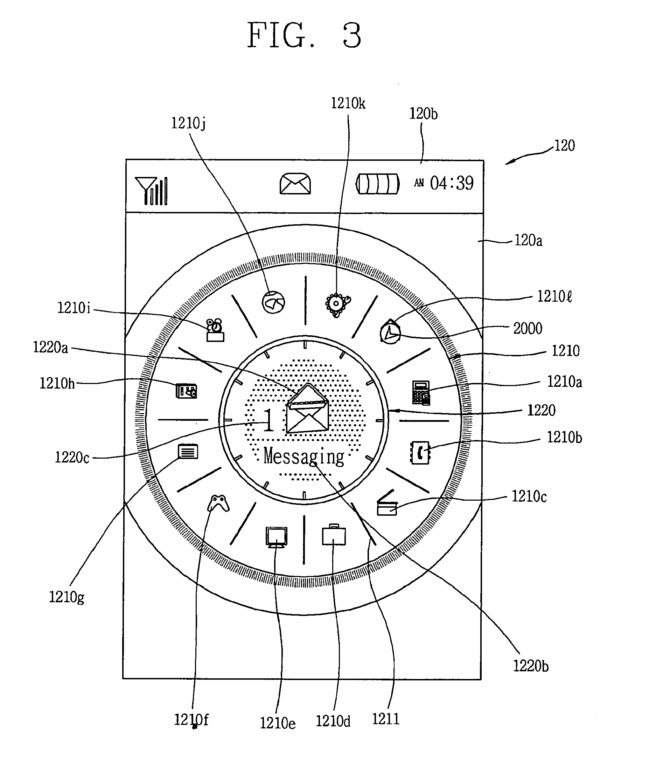

As shown in Fig. 3, as an example of the information displayed on the selected menu display area 1220, if the menu item selected from the first menu display area 1210 is a message function and its shortcut key number is "1", the selected menu display area 1220 may then display in combination with the number "1" as the shortcut key information, an image of an envelop, and a text (messaging) in a certain language (i.e., English).

Herein, the image 1220a displayed on the selected menu display area 1220 and the first menus 1210a~1210l displayed on the first menu display area 1210 may or may not have the same shape and/or color. In case the shape of the image 1220a is displayed differently, the images need to have an association with each other so that the user may recognize the relationship therebetween.

For example, if the shape of the first menu 1210l displayed on the first menu display area 1210 is provided in an image representing an envelope, the image 1220a displayed on the selected menu display area 1220 may be shown as an image of an opened envelope or an image of letter paper that has been taken out of the envelope.

In addition, the images displayed on the first menu display area 1210 and the selected menu display area 1220 may have the same or different size from each other. For example, the image displayed on the first menu display area 1210 may be displayed to be smaller than that displayed on the selected menu display area 1220. And, the image displayed on the selected menu display area 1220 may be displayed to be larger than that displayed on the first menu display area 1210.

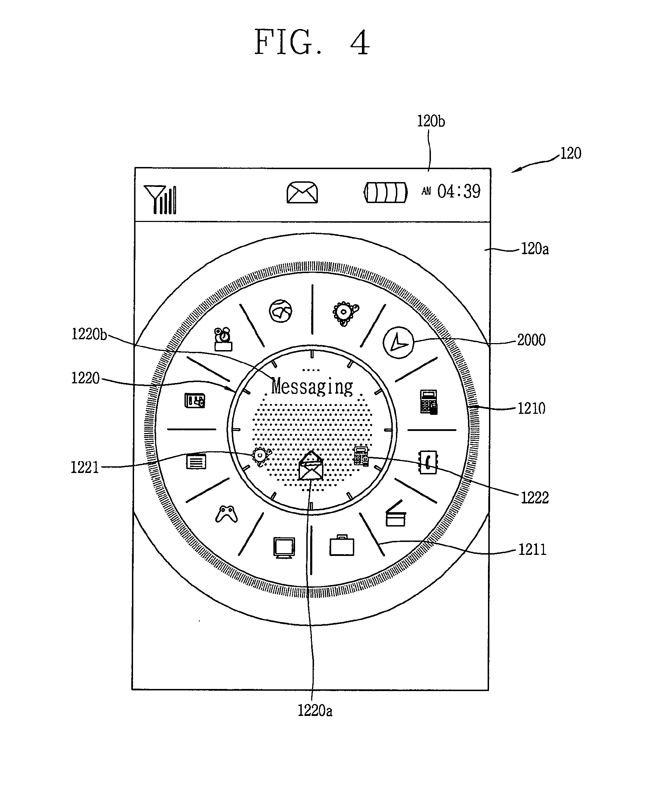

Referring to Fig. 4, the selected menu display area 1220 may display a menu selected among the first menus 1210a~1210l displayed on the selected menu display area 1220 as well as a plurality of static or dynamic images 1220a, 1221, 1222 which are arranged adjacent to the selected menu.

That is, centered about the image 1220a of the selected menu, the images 1221, 1222 may be displayed in an arrangement along the sides of the selected menu. In this case, as described above, the image displayed on the selected menu display area 1220 among the first menus 1210a~1210l selected by a signal from the input unit 110 may be displayed as an image corresponding to the menu selected among the first menus 1210a~1210l.

Further, the images of the menu items 1220a, 1221, 1222 displayed on the selected menu display area 1220 may be displayed in shapes or colors that are different from those displayed on the first menu display area 1210. In addition, among the images 1220a, 1221, 1222 displayed on the selected menu display area, the image 1220a as the selected menu item and images 1221, 1222 as the non-selected menu items may be distinguished from each other. For instance, the distinction may be implemented by displaying or having a movement effect on at least one of an image resolution, color, brightness, size, and shape.

In addition, as shown in Fig. 1 B, the control unit 160 detects the input signal from the rotation-type function key 110a of the input unit 110, the number key 110b, the navigation key 112, etc., and operates the rotation-type menu according to the detected input signal.

Referring to Figs. 5A and 5B, the operation of the rotation-type menu may be configured such that a cursor 2000 has a fixed location and each of the first menus 1210a-1210l arranged on the first menu display area 1210 is rotated (or moved), thereby changing the locations of the first menus 1210a-1210l while they are being rotated. That is, the control unit 160 controls to display a menu so that each of the first menus 1210a-1210l arranged on the first menu display area 1210 moves clockwise or counterclockwise, thereby moving to the next menu in the first menus 1210a-1210l and then outputting the menu.

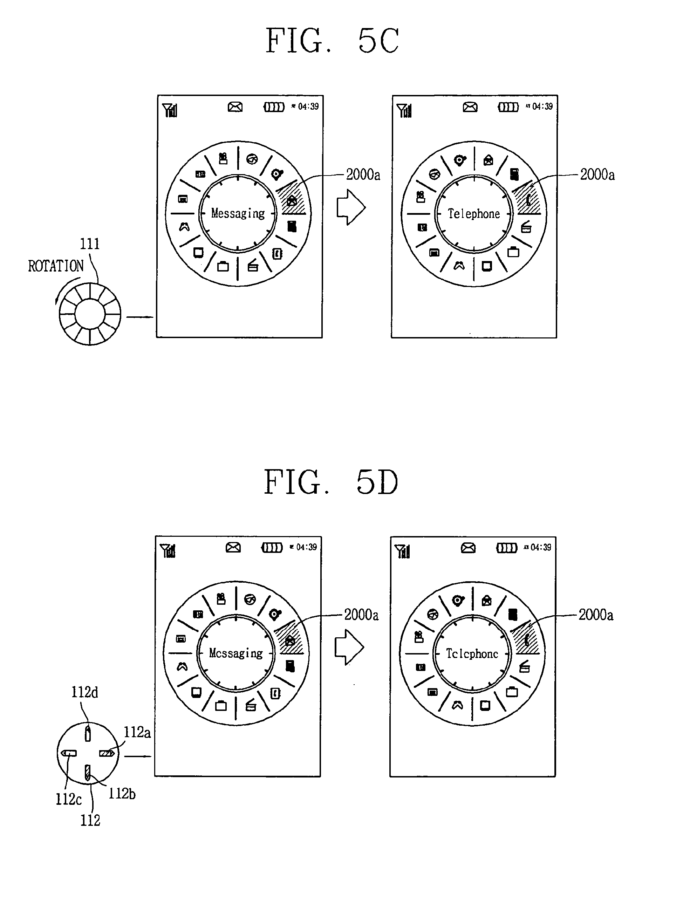

On the other hand, as shown in Figs. 5C and 5D, the operation of the rotation-type menu may be configured such that the activated-state displaying portion 2000a has a fixed location and each of the first menus 1210a-1210l arranged on the first menu display area 1210 is rotated, thereby changing its location. In the same way, the control unit 160 controls to display a menu so that each of the first menus 1210a-1210l arranged on the first menu display area 1210 moves clockwise or counterclockwise, thereby moving to the next menu in the first menus 1210a-1210l and then outputting the menu.

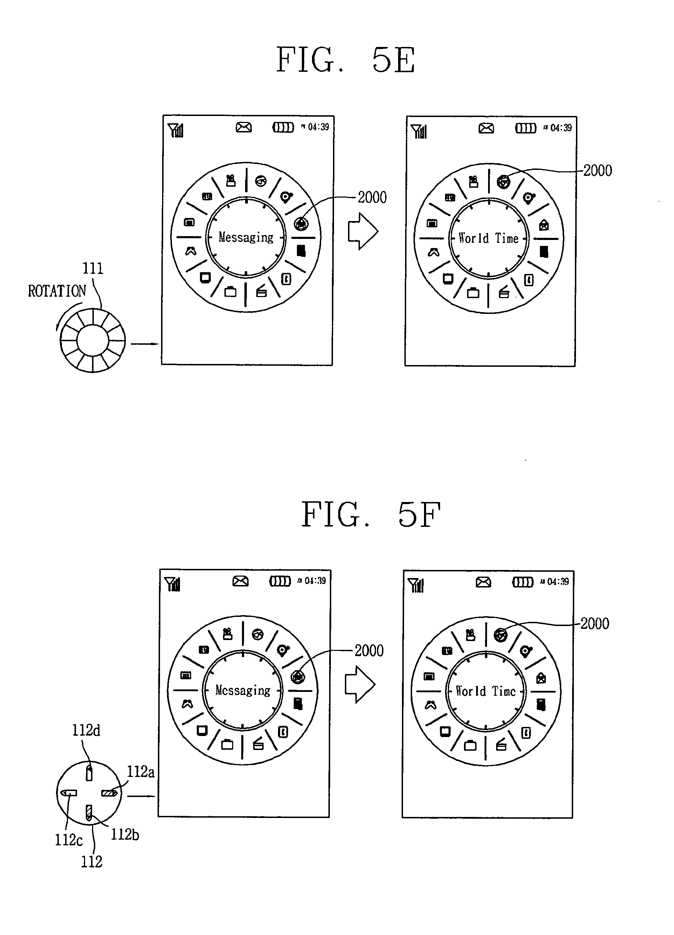

As another example, referring to Figs. 5E and 5F, each of the first menus 1210a-1210l arranged on the first menu display area 1210 has a fixed location and the cursor 2000 for selecting a certain menu from the first menus 1210a-1210l may be rotated (or moved) along the first menus 1210a-1210l. That is, a certain menu may be selected by the cursor 2000 moving along the first menus 1210a-1210l.

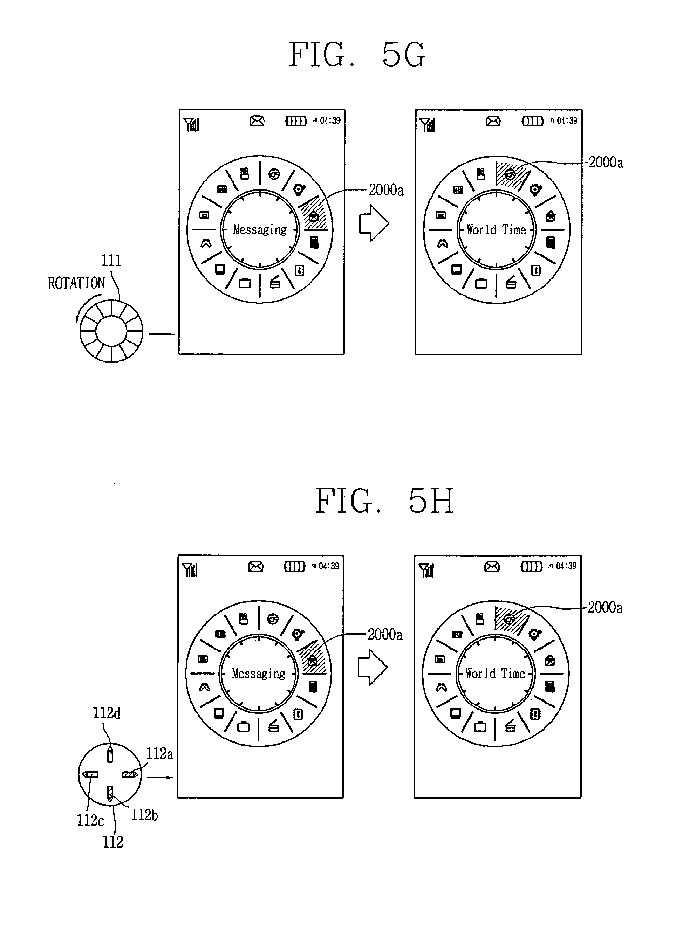

As another example, referring to Figs. 5G and 5H, each of the first menus 1210a-1210l arranged on the first menu display area 1210 has a fixed position and the activated-state displaying portion 2000a for selecting a certain menu from the first menus 1210a-1210l may be rotated by moving along the first menus 1210a-1210l. In this case, a certain menu may be selected by the activated-state displaying portion 2000a moving along the first menus 1210a-1210l.

Herein, the configuration of the activated-state displaying portion 2000a is similar to that of the cursor 2000 as shown in Figs. 3 and 4. One of the plurality of the first menus 1210a-1210l is selected by the activated-state displaying portion 2000a. When the activated-state displaying portion 2000a reaches to a certain position (i.e., a position designated as a selected position), the selected menu reaching to the certain position may be configured to change its color or to enlarge its size. Meanwhile, the certain menu among the first menus 1210a-1210l located on the activated-state displaying portion 2000a may be displayed in a static or dynamic image, different from other menus. Or, an area corresponding to the selected first menu may be displayed in a different color or brightness from the corresponding areas of other menus.

Information about the certain menu selected among the first menus 1210a-1210l by the rotation-type menu may be displayed on the selected menu display area 1220, as described in the configuration of the display unit 120.

Some exemplary embodiments of the operation will now be described in more detail. The rotation-type menu is rotated according to a rotational direction, rotation speed, and a rotation angle of the rotation-type function key 111. Accordingly, as shown in Figs. 5A and 5C, if the rotation-type function key 111 is rotated in one direction, the first menus 1210a-1210l arranged on the first menu display area 1210 are rotated in the same direction with the rotation-type function key 111, thereby selecting a certain menu. As such, a more user-friendly and user-intuitive graphical user interface can be achieved.

Referring to Figs. 5B and 5D, a certain menu is selected by rotating the first menus 1210a-1210l arranged on the first menu display area 1210 using the navigation key 112. In this case, the rotation-type menu may be rotated by determining the number of times that the first menus 1210a-1210l are moved according to the number of signals generated by the directional keys 112a-122d of the navigation key 112. The rotation-type menu may also be rotated in the opposite direction.

Referring to Figs. 5E and 5G, if the rotation-type function key 111 is to be rotated in one direction, the first menus 1210a-1210l arranged on the first menu display area 1210 are in a fixed state. The cursor 2000 or the activated-state displaying portion 2000a is rotated in the same direction with the rotation-type function key 111 to select a certain menu.

The embodiments in Figs. 5F and 5H, as shown in Figs. 5B and 5D, indicate that a certain menu is selected by the navigation key 112. In a state that the first menus 1210a-1210l arranged on the first menu display area 1210 are fixed, the cursor 2000 or the activated-state displaying portion 2000a is rotated. In this case, the rotation-type menu may be rotated by determining the number of moving the cursor 2000 or the activated-state displaying portion 2000a according to the number of a signal generated by the directional keys 112a-122d of the navigation key 112. The rotation-type menu may also be rotated in the opposite direction.

In the embodiments in Figs. 5A through 5H, when the cursor 2000 or the activated-state displaying portion 2000a is located at a certain menu item, the control unit 160 may control the selected menu item to be immediately executed or to be executed by a signal generated by a separate execution key (not shown) provided by the input unit 110.

Meanwhile, the display unit 120 is controlled by the control unit 160 so as to display the rotation-type menu. In general, the display unit 120 can be implemented as an LCD (Liquid Crystal Display). However, without being limited to, the display unit 120 can be implemented in combination with an input function and a display function, such as a touch screen.

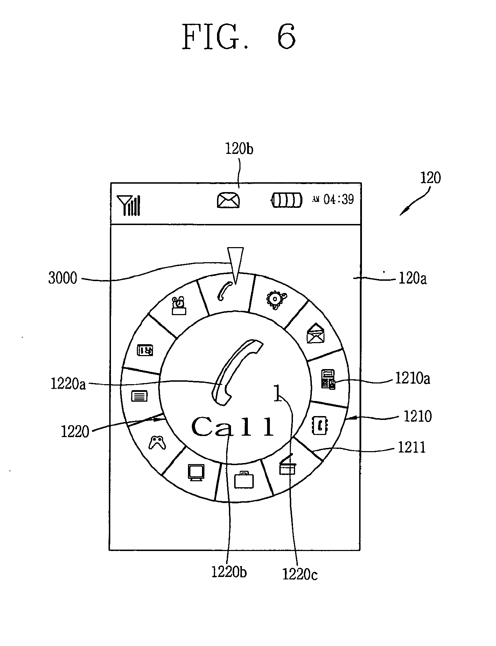

Figure 6 schematically illustrates the configuration of a rotation-type menu display unit according to another embodiment. In the embodiment in Fig. 6, the basic configuration of the rotation-type menu display unit can be the same as that of the previous embodiments. Accordingly, the present embodiment will describe other features in detail, other than the rotation-type menu display unit.

The display unit 120 (i.e. the main display area 120a) includes the first menu display area 1210 as described in the embodiments of Figs. 3 and 4. A plurality of the first menus 1210a-1210l are arranged on the first menu display area 1210 so as to have each own area by a menu separator 1211. Further, each of the first menus 1210a-12101 may be displayed with an icon or a text.

Further, the first menu display area 1210 may be rotated by a menu selecting signal generated by the input unit 110. That is, the control unit 160 controls to display a menu so that each of the first menus 1210a-1210l arranged on the first menu display area 1210 moves clockwise or counterclockwise, thereby moving to the next menu in the first menus 1210a-1210l and then outputting the menu.

Therefore, one of a plurality of the first menus 1210a-1210l may be selected by the rotation of the first menu display area 1210.

Herein, an indicator 3000 in the form of an arrow, a triangular icon, or a finger may be formed at one side of the first menu display area 1210 so as to be used to select the first menus 1210a-1210l indicated by the indicator 3000. When one of the first menus 1210a-1210l is located at the position where the indicator 3000 is located, the control unit 160 controls one of the first menus 1210a-1210l to be displayed in a shape different from those of other menus displayed on the first menu display area 1210.

When a menu separator 1211 (or other type of menu item distinguishing feature) for partitioning the plurality of the first menus 1210a-1210l passes the indicator 3000 by rotating the first menu display area 1210 by an input signal generated by the input unit 110, the indicator 3000 may be rotated (or bent) with a certain angle by the menu separator 1211 in a rotational direction of the first menu display area 1210.

Displaying the indicator 3000 to be rotated or bent with the certain angle is to have a visual effect indicating that the areas for the first menus 1210a-1210l divided by the menu separator 1211 are indicated by the indicator 3000. With this configuration, a user may clearly recognize that the related first menu item is selected by the rotation of the first menu display area 1210.

In this embodiment, when the indicator 3000 is located at a certain menu, the control unit 160 may control the certain menu item to be immediately executed, or to be executed by a signal generated by a separate execution key (not shown) provided by the input unit 110.

As shown in Figs. 3 and 4, information about the selected first menu item may be displayed on the selected menu display area 1220. Thus, detailed explanations therefor are omitted.

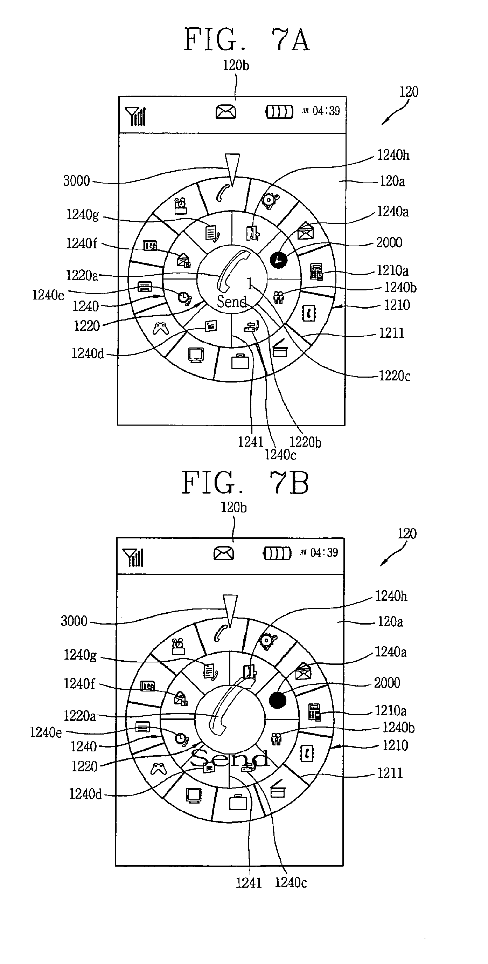

Figures 7A and 7B show another embodiment of the rotation-type menu display unit. The rotation-type menu display unit according to the present embodiment may be formed to display the first menu display area 1210 and the second menu display area 1240 together.

The description of this exemplary embodiment will be given in detail of when sub-menus associated with the first menus 1210a-1210l arranged on the first menu display area 1210 exist, the second menus 1240a-1240h, as information about the sub-menus, may be displayed with the first menus 1210a-1210l, which are upper level menus.

And, the configuration of the first menu display area 1210 and the second menu display area 1240 may be the same as one of the embodiments in Figs. 3, 4, and 6. Thus, detailed explanations for the same configurations are omitted, but other features thereof will be described in detail.

First, the configuration of the first menu display area 1210 can be the same as the embodiments in Figs. 3 and 4. And, the second menu display area 1240 may be disposed inside (or within) the first menu display area 1210. Further, the second menu display area 1240 may have a similar configuration to the first menu display area 1210.

Herein, the second menu display area 1240 may display the second menus 1240a-1240h so as to display information about the sub-menus associated with the first menus 1210a-1210l. The second menus 1240a-1240h may be formed to have each own area (or sector) by a plurality of menu separators 1241, similar to the configuration of the first menus 1210a-1210l And, each of the second menus 1240a-1240h arranged on the second menu display area 1240 may be represented with a corresponding image thereto so as to represent information about the sub-menu associated with the selected first menu. In addition, each of the second menus 1240a-1240h may be displayed with an icon or a text.

The second menu display area 1240 may be displayed only when one of the first menus 1210a-1210l is selected from the first menu display area 1210 and then is executed, or may be always displayed with the first menu display area 1210.

For instance, when one of the first menus 1210a-1210l is selected from the first menu display area 1210 by the indicator 3000, the control unit 160 may provide control to display on the second menu display area 1240 by directly executing the function associated with a certain first menu where the indicator 3000 is located. While the first menu display area 1210 is being rotated, the second menu display area 1240 associated with the first menus 1210a-1210l indicated by the indicator 3000 may be directly executed and then displayed.

As another example, when one of the first menus 1210a-1210l in the first menu display area 1210 is to be selected (upon rotation), only the first menu display area 1210 is displayed. When a certain menu is selected from the first menus 1210a-1210l, the control unit 160 may control the second menu display area 1240 associated with the selected first menu to be executed and then to be displayed. In this case, while the first menu display area 1210 is being rotated, the second menu display area 1240 associated with the first menus 1210a-1210l indicated by the indicator 3000 is not executed. When the first menu display area 1210 rotation is stopped, the second menu display area 1240 associated with the first menus 1210a-1210l indicated by the indicator 3000 is executed to display.

As another example, when one of the first menus 1210a-1210l is selected from the first menu display area 1210 by the indicator 3000, the control unit 160 controls the second menu display area 1240 associated with the certain first menu indicated by the indicator 3000 to be executed by a signal generated by a separate execution key (not shown) provided by the input unit 110 and then to be displayed. In this case, the second menu display area 1240 associated with one of the first menus 1210a-1210l selected by the indicator 3000 may be controlled not to be displayed until before a signal is generated by the execution key.

With such various display methods, the second menu display area 1240 may have a configuration for selecting one of the second menus 1240a-1240h. As an example of the configuration to select one of the second menus 1240a-1240h, the second menu display area 1240 may be provided with a cursor 2000 which moves (rotates) from one of the second menus to an adjacent menu along the second menus 1240a-1240h by a menu selecting signal generated by the inputting unit 110 to select one of the second menus 1240a-1240h. Herein, the second menu display area 1240 may be implemented not to be rotated. As another example, the cursor 2000 may be fixed to one position of the second menu display area 1240, and the second menus 1240a-1240h arranged on the second menu display area 1240 may be moved by a menu selecting signal generated by the input unit 110, thereby selecting a certain menu among the second menus 1240a-1240h.

Meanwhile, the display unit 120 may further include a selected menu display area 1220 that can display information about a selected menu among the second menus 1240a-1240h. The selected menu display area 1220 may be implemented as described in the embodiments of Figs. 3 and 4. That is, when one of the second menus 1240a-1240h is to be selected, information about the selected menu may then be displayed on the selected menu display area 1220.

Herein, when the cursor 2000 is located in the certain menu, the control unit 160 may control the certain menu to be directly executed or to be executed by a signal generated by a separate execution key (not shown) provided by the input unit 110.

In executing the certain second menu, the selected menu 1220a displayed on the selected menu display area 1220 may be displayed with the same shape (an icon or a text) as the selected second menu, or may be displayed with additional information about the selected second menu (i.e., an icon and a text). Herein, the selected menu 1220a displayed on the selected menu display area 1220 may be displayed by overlaying the displayed icon and/or message with the second menu display area 1240 in order that a user may easily recognize information about the selected second menu. In other words, the selected menu 1220a displayed on the selected menu display area 1220 may be displayed the same as the embodiments of Figs. 3 and 4 thus detailed explanations therefor are omitted.

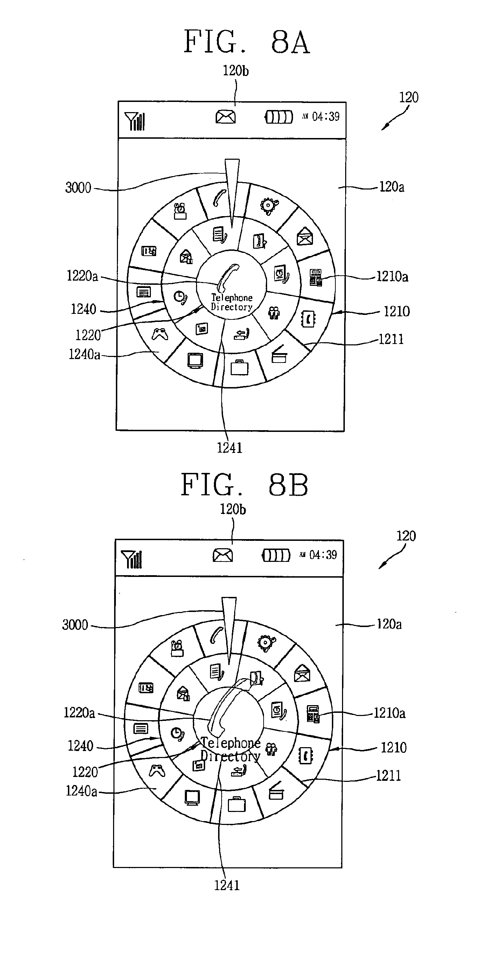

Figures 8A and 8B show another embodiment of the rotation-type menu display unit. The embodiments of Figs. 8A and 8B may be implemented to display both the first menu display area 1210 and the second menu display area 1240. The basic configuration in this embodiment may be the same as those in Figs. 7A and 7B. Therefore, explanations for the same configuration will be given in brief, and explanations for other features will be given in more detail.

In this embodiment, as the embodiments in Figs. 7A and 7B, when submenus associated with the first menus 1210a-1210l arranged on the first menu display area 1210 exist, the second menus 1240a-1240h containing information about the sub-menus may be displayed with the first menus 1210a-1210l, which are the upper level menus.

With this configuration, as the embodiments in Figs. 7A and 7B, if one of the first menus 1210a-1210l is selected by the rotation of the first menu display area 1210, the selected menu is executed and then the second menu display area 1240 is displayed to arrange the first menus 1210a-1210l providing information (list) about sub-menus associated with the selected menu.

When the second menus 1240a-1240h are displayed at one side (or adjacent to) of the first menu display area 1210, an indicator 3000 may be formed to be extended into the second menu display area 1240. In this case, the first menus 1210a-1210l and the second menus 1240a-1240h can be selected by the indicator 3000.

As an example of selecting the first menus 1210a-1210l, when one of the first menus 1210a-1210l is located at a position where the indicator 3000 is located, the control unit 160 may control the second menu display area 1240 associated with the certain first menu where the indicator 3000 is located to be immediately executed and then to be displayed.

As another example, when one of the first menus 1210a-1210l on the first menu display area 1210 is to be selected (upon rotation), the control unit 160 may control only the first menu display area 1210 to be displayed. When a certain menu from the first menus 1210a-1210l is selected (after rotation is stopped), the control unit 160 may control the second menu display area 1240 associated with the selected first menu to be executed and then to be displayed.

As another example, when one of the first menus 1210a-1210l on the first menu display area 1210 is selected by the indicator 3000, the control unit 160 controls the second menu display area 1240 associated with the certain first menu indicated by the indicator 3000 to be executed by a signal generated by a separate execution key (not shown) provided by the input unit 110 and then to be displayed.

Herein, a selected menu display area 1220 may be further positioned at (or near) the center of the second menu display area 1240, as described in the first embodiment. In this case, the selected menu display area 1220 may display information about the menu selected among the first menus 1210a-1210l. Examples of information displayed on the selected menu display area 1220 may be fully understood by the aforementioned examples, thus detailed explanations therefor are omitted.

As shown in Fig. 6, the indicator 3000 may be formed as an icon such as in a triangular shape or an arrow. When the second menu display area 1240 associated with the selected first menu is executed and displayed, the indicator 3000 may be extended to the second menu display area 1240 so as to select a certain menu from the second menus 1240a-1240h arranged on the second menu display area 1240.

When the menu separator 1241 (or other visual discriminator) for partitioning the plurality of the second menus 1240a-1240h passes the indicator 3000 by rotating the second menu display area 1240 by an input signal generated by the input unit 110, the indicator 3000 may be rotated or bent with a certain angle by the menu separator 1241 in a rotational direction of the second menu display area 1240.

As an example of selecting the second menus 1240a-1240h through the indicator 3000, if one of the second menus 1240a-1240h is located at a certain position where the indicator 3000 is located, the control unit 160 may control information about the certain second menu to be displayed on the selected menu display area 1220.

On the other hand, when one of the second menus 1240a-1240h is to be selected (that is, being rotated), the selected menu display area 1220 does not display any information. When a certain menu among the second menus 1240a-1240h is selected (that is, stopped rotating), the control unit 160 may control information about the selected second menu to be displayed on the selected menu display area 1220.

As another example, when one of the second menus 1240a-1240h is to be selected by the indicator 3000, the control unit 160 may control information about the certain second menu where the indicator 3000 is located to be executed by a signal generated by a separate execution key (not shown) in the input unit 110 and then to be displayed.

As described in the first embodiment, the selected menu 1220a displayed on the selected menu display area 1220 may be displayed by overlaying the displayed icon and/or text with the second menu display area 1240 in order that a user may easily recognize information about the selected second menu. In other words, the selected menu 1220a displayed on the selected menu display area 1220 may be displayed the same as the embodiments of Figs. 3 and 4. Here, it may be understood that the graphical overlay effect may be made to be semitransparent or opaque.

Even though it is not shown, when a certain menu item is selected among the first menus 1210a-1210l, the second menus 1240a-1240h as sub-menus associated with the certain menu item may be displayed being switched with the position of the certain first menu item. That is, when one of the first menus 1210a-1210l is selected, the second menus 1240a-1240h may be displayed on the first menu display area 1210 and the first menus 1210a-1210l on the second menu display area 1240.

In this case, the indicator 3000 may select a certain menu among the second menus 1240a-1240h displayed on the first menu display area 1210, without changing its shape (change in its length) as shown in Figs. 7A and 7B.

Hereinafter, the description will now be given in detail of a method for controlling a mobile terminal having a rotation-type menu display unit according to other exemplary embodiments.

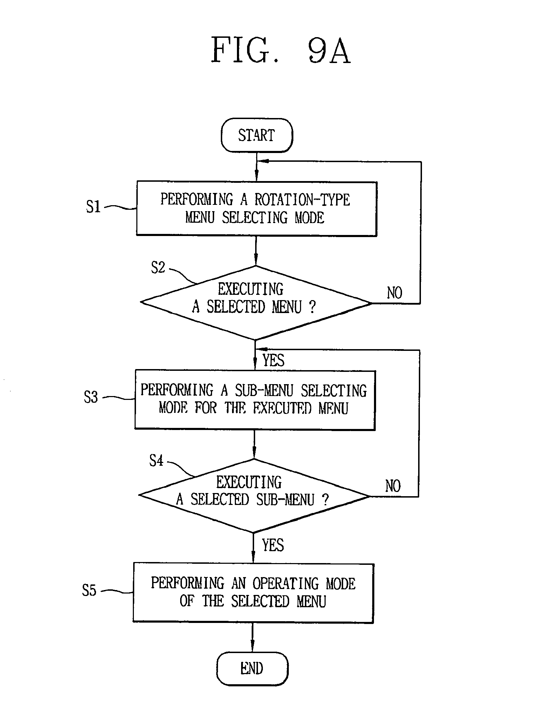

Referring to Fig. 9A, the method for controlling a mobile terminal having a rotation-type menu display unit according to one embodiment will now be explained. The present embodiment is implemented in case that all menus have sub-menus associated therewith.

The first step S1 is a step that an operating mode is controlled in a rotation-type menu selecting mode. The control unit 160 may control one of the first menus 1210a-1210l arranged on the first menu display area 1210 to be selected by an input signal generated by the input unit 110.

Herein, the first menus 1210a-1210l may be selected by a cursor 2000, an indicator 3000 or other type of activated-state displaying portion, as aforementioned. Meanwhile, the menus may be selected by rotating an area itself of the first menus 1210a-1210l (that is, locations of each menu), or by moving the cursor 2000 or the activated-state displaying portion itself.

In the next step S2, whether the function of the selected first menu is performed or not is checked. That is, it is checked whether an input signal for executing the first menu selected by the input unit 110 is generated or not. If an input signal for executing the selected first menu is not generated, the selection process of the first menus 1210a-1210l may continue to perform.

In the step S3, when an input signal for executing the selected menu among the first menus 1210a-1210l is generated, a mode for selecting second menus 1240a-1240h associated with the selected menu is performed. In the step S3 for selecting the second menus 1240a-1240h, the control unit 160 may control one of the first menus 1210a-1210l arranged on the first menu display area 1210 to be selected by the input signal generated by the input unit 110.

Herein, the second menus 1240a-1240h may be selected by the cursor 2000, the indicator 3000 or the activated-state displaying portion, as described in selecting the first menus 1210a-1210l. Meanwhile, as described above, the menus may be selected by rotating an area itself of the second menus 1240a-1240h (that is, locations of each menu), or by moving the cursor 2000 or the activated-state displaying portion itself.

In the step S4, whether the selected menu among the second menus 1240a-1240h is executed or not is checked. That is, it is checked whether an input signal for executing the certain menu selected among the second menus 1240a-1240h by the input unit 110 is generated or not. In this step S4, if an input signal for executing the certain menu selected among the second menus 1240a-1240h is not generated, the selection process of the second menus 1240a-1240h may continue to perform.

If an input signal for executing the certain menu selected among the second menus 1240a-1240h in the step S4 for executing the selected submenu is generated, an operating mode for the selected menu may be performed in the step S5. In other words, the function for a certain menu built in the mobile terminal 10 is performed.

If there are another sub-menus associated with the second menus 1240a-1240h, it is obvious that selecting the submenus and performing its functions may be possible by using the aforementioned method thus detailed explanations therefor are omitted.

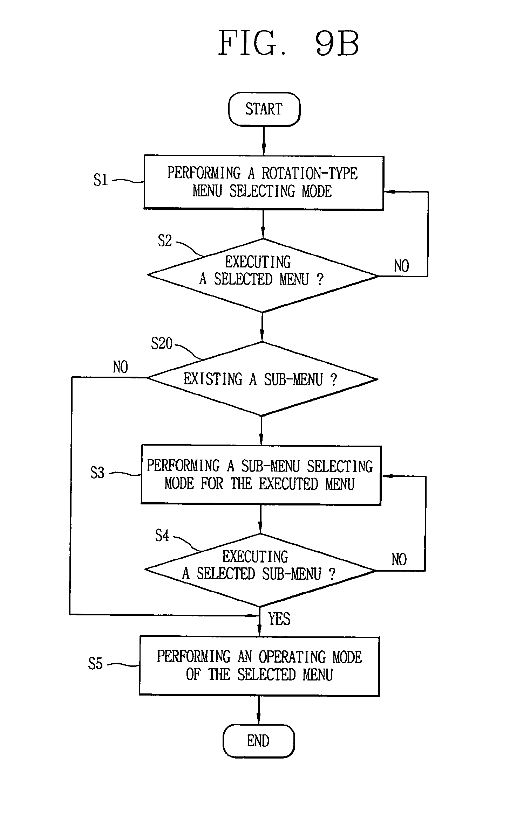

Referring to Fig. 9B, a method for controlling the mobile terminal having a rotation-type menu display unit according to another embodiment will now be explained. This embodiment is implemented in a case that a menu without submenus and a menu with submenus are present together.

The embodiment in Fig. 9B is the same as that in Fig. 9A, except for the step S20 for checking whether a sub-menu between the step S2 and the step S3 exists or not. Therefore, the step S20 for checking the presence of the sub-menu will be explained in detail, and explanations for other same steps are omitted.

In the first step S1, a certain menu is selected among the first menus 1210a-1210l. Then, it is checked whether the certain menu selected among the first menus 1210a-1210l by an input signal from the input unit 110 is executed or not in the step S2.

In the step S2, if an input signal for executing the certain menu selected among the first menus 1210a-1210l is generated, it is checked whether submenus associated with the certain menu exists or not in the next step S20.

If the sub-menus associated with the certain menu selected in the step S20 exist, a mode for selecting second menus 1240a-1240h associated with the selected menu is performed in the step S3. If the sub-menus associated with the certain menu selected in the step S20 do not exist, an operating mode for the selected menu is performed in the step S5. In other words, the function for a certain menu built in the mobile terminal 10 may be performed.

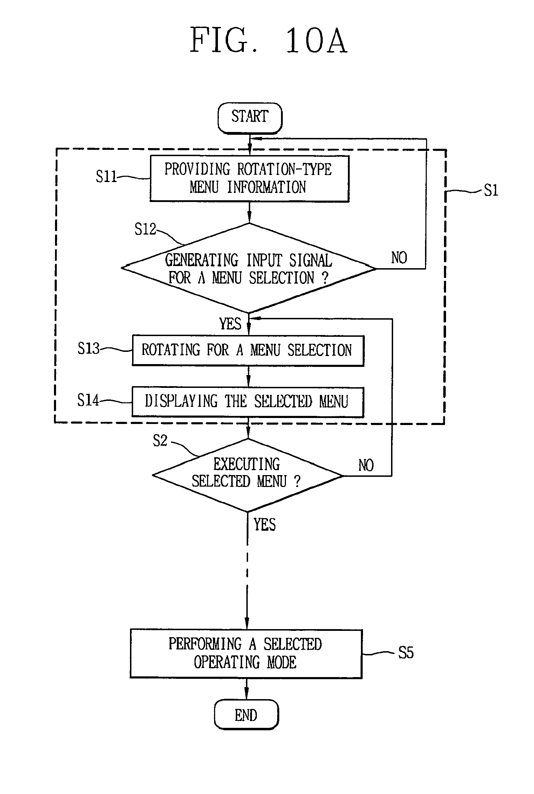

Referring to Fig. 10A, one embodiment regarding the method for controlling the rotation-type menu in the first menu display area will be described in detail.

The step S1 for performing the selection mode of a rotation-type menu may include the following steps.

For instance, the step S1 may include a step for providing rotation-type menu information S11, a step for checking input signal generation for a menu selection S12, a rotating step for the menu selection S13, and a step for displaying the selected menu S14.

Now, detailed explanations for an operating process of the steps S11 through S 14 will be given. The step for providing rotation-type menu information S11 is performed to execute a function stored in the mobile terminal 10. In the step S11, the rotation-type menu information associated with the first menus 1210a-1210l is displayed on the display unit 120 so as to select a certain menu among the first menus 1210a-1210l.

In the next step S12, it is checked whether a signal for selecting a certain menu among the first menus 1210a-1210l is generated by the input unit 110 based on the rotation-type menu information.

If an input signal for a menu selection is not generated in the step S12, the step S11 for providing rotation-type menu information continues to perform so as to select a certain menu among the first menus 1210a-1210l. If an input signal for a menu selection is generated in the step S12, the rotating step for a menu selection S13 is performed to select a certain menu among the first menus 1210a-1210I displayed on the display unit 120.

As described above, a rotation for selecting a certain menu among the first menus 1210a-1210l may be performed by rotating an area itself of the first menus 121 **0a-1 210l** (that is, locations of each menu), or by moving the cursor 2000 or the activated-state displaying portion itself. When the certain menu is selected among the first menus 1210a-1210l by the rotation, the menu may be selected by locating the cursor 2000, the indicator 3000 or the activated-state displaying portion (not shown) in a selection area which are designated for each of the first menus 1210a-1210l.

If the certain menu among the first menus 1210a-1210l has been selected by the step S13, the selected menu is displayed on the selected menu display area 1220 of the display unit 120 in the step S14.

If the selected menu is displayed, as described in Figs. 9A and 9B, the selected menu may be executed or a process for selecting another menu may continue to perform step S2.

The embodiment in Fig. 10A may be applied to the embodiments in Figs. 9A and 9B, and may also be applied to the process for selecting menus without having sub-menus.

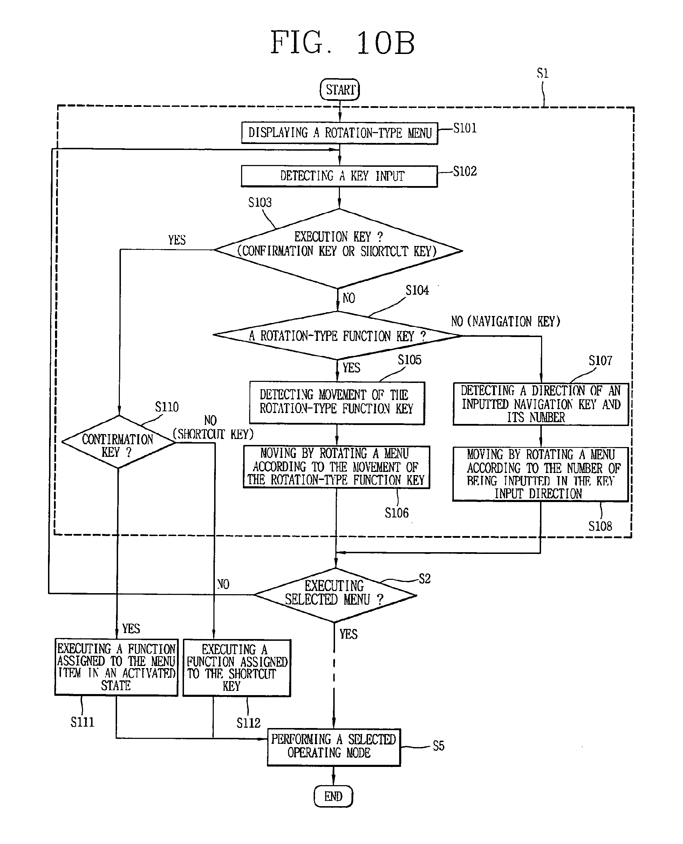

Hereinafter, referring to Fig. 10B, another embodiment of the method for controlling the rotation-type menu in the first menu display area will now be described in detail. The step S1 for performing the selection mode of the rotation-type menu may include the following steps.

For example, as shown in the embodiment of Fig. 1B, when the input unit 110 is provided with a plurality of input keys, the steps for performing technical characteristics in the described embodiments by using each corresponding input key.

In more detail, the step for providing rotation-type menu information S101 is performed so as to execute a function stored in the mobile terminal 10. In the step S101, the rotation-type menu information for the first menus 210a-1210l is displayed on the display unit 120 so as to select a certain menu among the first menus 1210a-1210l.

In the next step S102, it is detected whether the input unit 110 generates a signal by the input key so as to select a certain menu among the first menus 1210a-1210l displayed on the display unit 120.

It is then checked which of the input keys has generated the signal, such as an execution key, a rotational key, or a navigation key in the steps S103 and S104.

Meanwhile, the rotation-type menu information is provided by the previous step S101, and a certain menu where the cursor, the indicator or the activated-state displaying portion is located is the menu to be selected. Upon performing the previous step S101 by the input signal of the execution key, the function of the certain menu where the cursor, the indicator or the activated-state displaying portion is located may be executed. Accordingly, the generation of the signal by the execution key may be checked in the step S103.

If the execution key may be either a confirmation key or a shortcut key, it may check whether the execution key is the confirmation key or the shortcut key in the next step S110. According to the inputted key (the confirmation key or the shortcut key), as shown, the operating mode for the selected menu may be performed S111 or the operating mode defined by the shortcut key may be performed S112.

Further, if the input key of the generated signal is to be a rotational key, the movement of the rotational key (i.e., a rotational direction, rotation speed, a rotational angle) is detected in the step S105. Based on the signal generated by the movement of the rotational key, a rotation for a menu selection is performed in the next step S106.

As described above, the rotation for a menu selection may be performed by rotating an area itself of the first menus 1210a-1210l (that is, locations of each menu), or by moving the cursor 2000 or the activated-state displaying portion itself. When a certain menu is selected among the first menus 1210a-1210l by the rotation, the menu may be selected by locating the cursor 2000, the indicator 3000 or the activated-state displaying portion (not shown) in a selection area which are designated for each of the first menus 1210a-1210l.

In addition, if the input key of the generated signal is a navigation key, the movement of the navigation key (i.e., a direction, the number times of input, etc.) is detected in the step S107. Based on the signal generated by the movement of the navigation key, a rotation for a menu selection is performed in the next step S108.

As described above, a rotation for a menu selection may be performed by rotating an area itself of the first menus 1210a-1210l (that is, locations of each menu), or by moving the cursor 2000 or the activated-state displaying portion itself. When a certain menu is selected among the first menus 1210a-1210l by the rotation, the menu may be selected by locating the cursor 2000, the indicator 3000 or the activated-state displaying portion (not shown) in a selection area which are designated for each of the first menus 1210a-1210l.

If the selected menu is displayed, as described in Figs. 9A and 9B, the selected menu may be executed or a process for selecting another menu may continue to perform S2.

The embodiment in Fig. 10B may be applied to the embodiments in Figs. 9A and 9B, and may also be applied to the process for selecting menus without having sub-menus.

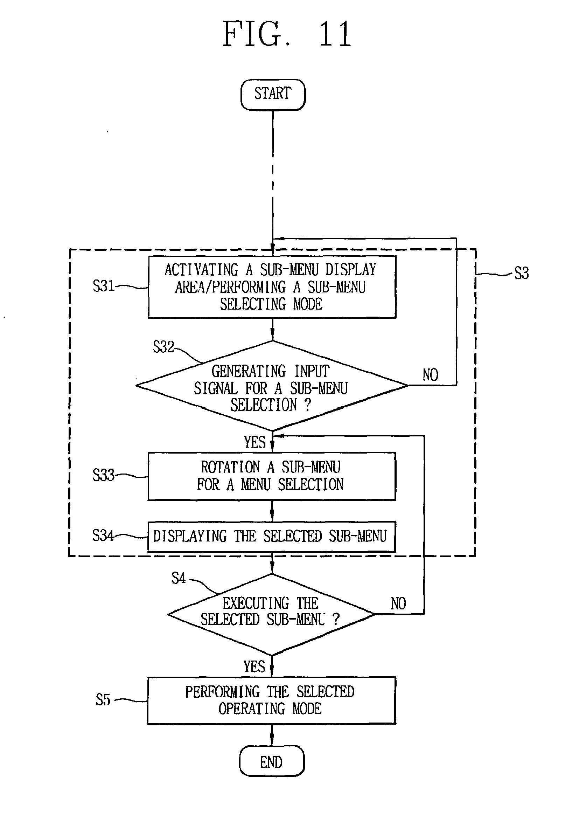

The following description will now be given in detail of the preferred embodiments of the method for controlling the rotation-type menu in the second menu display area with reference to Fig. 11.

A mode for selecting a certain menu among the second menus 1240a-1240h, as sub-menus for the certain menu, is performed in the step S2 when a certain menu selected among the first menus 1210a-1210l is being executed.

As an embodiment of the process for selecting one of the second menus 1240a-1240h displayed on the display unit 120, the following steps may include: a step for activating sub-menu displaying area/performing submenu selecting mode S31, a step for checking an input signal generation for selecting a sub-menu S32, a step for rotating a sub-menu for selecting a menu S33, and a step for displaying the selected sub-menu S34.

The following description of one embodiment will now be given in detail of the operating process for each step S31 through S34. According to the execution of the selected first menu in the step S2, a sub-menu selecting mode is performed by displaying the second menu associated with the certain menu selected among the first menus 1210a-1210l on the second menu display area 1240 in the step S31.

Then, it is checked whether an input signal for selecting the second menu is generated by the input unit 110 or not in the step S32. If the input signal is not generated during this step S32, the sub-menu selecting mode may continue to perform. But if the input signal is generated, a rotation is performed to select the second menus 1240a-1240h for executing the corresponding function S33.

As described above, a rotation for selecting a certain menu may be performed by rotating an area itself of the second menus 1240a-1240h (that is, locations of each menu), or by moving the cursor 2000 or the activated-state displaying portion itself. The certain menu is selected among the second menus 1240a-1240h by the cursor 2000, the indicator 3000 or the activated-state displaying portion (not shown), as shown in the selection of the first menus 1210a-1210l.

When a certain menu is selected among the second menus 1240a-1240h by the step S33, the selected menu is displayed on the selected menu display area 1220 S34.

The embodiment in Fig. 11 may be applied to the embodiments in Figs. 9A, 9B, 10A and 10B.

According to the aforementioned embodiments, when a menu for using a function stored in the mobile terminal is selected, the user need not look separately at each menu in a list of selected menus, thereby making it easier to use and can reduce eye fatigue.

The present disclosure provides a mobile phone comprising: a screen to display information; a rotary input device to receive user inputs; a controller adapted to cooperate with the screen and the rotary input device to display multiple menu items on the screen in a circular layout with a central region to display information related to at least one of the menu items. The controller may determine the total number of menu items to be displayed in the circular layout and performs graphical image processing such that all or some of the menu items fit in the circular layout. At least one of a size and shape of the menu items may be adjusted based on the determined total number of menu items to be displayed such that all menu items can be seen by a user. The circular layout may comprise: first menu items positioned along a first diameter region of the circular layout; and second menu items positioned along a second diameter region within the first diameter region of the circular layout. The first diameter region may be related to higher level menu items and the second diameter region may be related to lower level menu items, or the first diameter region may be related to lower level menu items and the second diameter region may be related to higher level menu items. The mobile phone may further comprise: a graphical indicator that can be moved on the screen along at least one of the outer diameter region and the inner diameter regions by using the rotary input device to visually distinguish one or more menu items. A visually distinguished menu item can be selected by the user via at least one of the rotary input device and a different input means. Information related to a selected menu item may be displayed at the central region. The rotary input device may comprise a rotatable element or a touch-sensitive sensor device.

The present disclosure also provides a graphical user interface comprising: at least one annular region to display a plurality of menu items; and a central region within an innermost annular region to display information related to at least one of the menu items. The graphical user interface may further comprise: an edge portion adjacent to and outside the annular region to display mobile phone operation related information related to at least one of antenna status, battery status, current time, and message receipt status. Each annular region may be comprised of sectors, with each sector containing one menu item icon therein. The at least one annular region may comprise an outer annular region comprising menu items of a first hierarchy and an inner annular region comprising menu items of a second hierarchy. The graphical user interface may further comprise: a graphical cursor element displayed on at least one of the annular region and the central portion. At least one of the menu items and the graphical cursor element may be moveable relative to each other via a user input command.

The embodiments of the present disclosure have been described herein with reference to the accompanying drawings. It is further noted that the foregoing examples have been provided merely for the purpose of explanation and are in no way to be construed as limiting of the present disclosure. While the present features have been described with reference to some exemplary embodiments, it is understood that the words which have been used herein are words of description and illustration, rather than words of limitation.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present description may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
one or more bodies;
an input unit provided at one of the bodies; and
a display unit that is adapted to display a menu list having a plurality of menus, and adapted to display the menu list in a rotating manner by a signal generated by the input unit.

2. The mobile terminal of claim 1, wherein one menu of the menu list is selected by a cursor, an activated-state displaying portion or an indicator which is disposed in a fixed location.

3. The mobile terminal of claim 1, wherein menus listed on the menu list are divided by a menu separator, there is provided an indicator that selects one of the menu list, and the indicator is displayed by being rotated or bent with a certain angle in a rotational direction of the menu list by the menu separator.

4. The mobile terminal of claim 1, wherein the menu list is arranged in a circular radial shape, and a selected menu display area is further provided at the center of the menu list for displaying information about a menu selected from the menu list.

5. The mobile terminal of claim 1, wherein information displayed on the selected menu display area is implemented as an icon and/or a text for indicating a menu selected from the menu list.

6. The mobile terminal of claim 5, wherein the icon and/or the text is displayed by being overlaid with the selected menu display area.

7. The mobile terminal of claim 1, wherein when one menu is selected from the menu list, the display unit further displays second menus as sub-menus associated with the selected menu, and the second menus are rotated so as to select one of the second menus.

8. The mobile terminal of claim 7, wherein the display unit is further provided with a selected menu display area for outputting information about the menu selected from the second menus.

9. The mobile terminal of claim 7, wherein further comprising: a cursor, an activated-state displaying portion, or an indicator which is disposed in a fixed location so as to select the second menus.

10. The mobile terminal of claim 7, wherein the second menus are divided by a menu separator, there is provided an indicator that is extended to a location of the second menus when the second menus are displayed, and the indicator is displayed by being rotated or bent with a certain angle in a rotational direction of the second menus by the menu separator.

11. A mobile terminal, comprising:
one or more bodies;
an input unit provided at one of the bodies; and
a display unit that is adapted to display a menu list having a plurality of menus, adapted to display a cursor or an activated-state displaying portion on the menu list so as to select one menu from the menu list, and adapted to rotate the cursor or the activated-state displaying portion along the menu list by a signal generated by the input unit.

12. The mobile terminal of claim 11, wherein the display unit is further provided with a selected menu display area for outputting information about a menu selected from the menu list.

13. The mobile terminal of claim 11, wherein the menu list is arranged in a circular radial shape, and a selected menu display area is further provided at the center of the menu list for outputting information about a menu selected from the menu list.

14. The mobile terminal of claim 12, wherein information displayed on the selected menu display area is implemented as an icon and/or a text for indicating a menu selected from the menu list.

15. The mobile terminal of claim 14, wherein the icon and/or the text is displayed by being overlaid with the selected menu display area.

16. The mobile terminal of claim 11, wherein when one menu is selected from the menu list, the display unit further displays second menus as sub-menus associated with the selected menu, displays a cursor or an activated-state displaying portion on the second menu so as to select one of the second menus, and rotates the cursor or the activated-state displaying portion along the second menus by a signal generated by the input unit.

17. The mobile terminal of claim 16, wherein the display unit is further provided with a selected menu display area for outputting information about a menu selected from the second menus.

18. A mobile terminal, comprising:
one or more bodies;
an input unit provided at one of the bodies; and
a display unit that outputs information,
wherein the display unit comprises a first menu display area that is adapted to arrange first menus, and adapted to rotate the first menus by a signal generated by the input unit so as to select one of the first menus; and a second menu display area that is adapted to display the second menus associated with the selected menu among the first menus, and adapted to rotate the second menus by a signal generated by the input unit so as to select one of the second menus.

19. The mobile terminal of claim 18, wherein the display unit is further provided with a selected menu display area for outputting information about a menu selected from the first menus or the second menus.

20. The mobile terminal of claim 18, wherein one of the first menus and/or the second menus is selected by a cursor, an activated-state displaying portion, or an indicator which is disposed in a fixed location.

21. The mobile terminal of claim 18, wherein each of menus arranged on the first menus and/or the second menus are divided by a menu separator, there is provided an indicator for selecting one of the first menus and/or the second menus, and the indicator is displayed by being rotated or bent with a certain angle in a rotational direction of the first menus and/or the second menus by the menu separator.

22. The mobile terminal of claim 18, wherein information displayed on the selected menu display area is implemented as an icon and/or a text for indicating a menu selected from the first menus and/or the second menus.

23. The mobile terminal of claim 22, wherein the icon and/or the text is displayed by being overlaid with the selected menu display area.

24. A mobile terminal, comprising:
one or more bodies;
an input unit provided at one of the bodies; and
a display unit that outputs information,
wherein the display unit comprises a first menu display area that is adapted to arrange first menus, adapted to display a cursor or an activated-state displaying portion on the first menus so as to select one of the first menus, and adapted to rotate the cursor or the activated-state displaying portion along the first menus by a signal generated by the input unit; and a second menu display area that is adapted to display the second menus associated with the menu selected among the first menus, adapted to display the cursor or the activated-state displaying portion on the first menus so as to select one of the second menus, and adapted to rotate the cursor or the activated-state displaying portion along the second menus by a signal generated by the input unit.

25. The mobile terminal of claim 24, wherein the display unit is further provided with a selected menu display area for outputting information about a menu selected among the first menus or the second menus.

26. The mobile terminal of claim 25, wherein information displayed on the selected menu display area is implemented as an icon and/or a text for indicating a menu selected among the first menus or the second menus.

27. The mobile terminal of claim 26, wherein the icon and/or the text is displayed by being overlaid with the selected menu display area.

28. A menu display method of a mobile terminal, comprising:
operating a mode for a menu selection by rotating a menu list based on an input signal generated by an input unit;
selecting a menu from the menu list;
displaying information about the selected menu on a selected menu display area; and
executing the selected menu.

29. The menu display method of a mobile terminal of claim 28, wherein the selecting a menu comprises checking whether an input signal for a menu selection is generated or not; and selecting a menu by rotating the menu list by the input signal.

30. The menu display method of a mobile terminal of claim 28, wherein the selecting a menu comprises detecting an operating key which has generated an input signal to the input unit; and selecting a menu by rotating the menu list based on a signal generated by the detected operating key.

31. A menu display method of a mobile terminal, comprising:
operating a mode for a menu selection by rotating a cursor or an activated-state displaying portion along a menu list based on an input signal generated by an input unit;
selecting a menu from the menu list;
displaying information about the selected menu on a selected menu display area; and
executing the selected menu.

32. The menu display method of a mobile terminal of claim 31, wherein the selecting a menu comprises checking whether an input signal for a menu selection is generated or not; and selecting a menu by rotating the cursor or the activated-state displaying portion along the menu list by the input signal.

33. The menu display method of a mobile terminal of claim 31, wherein the selecting a menu comprises detecting an operating key which has generated an input signal to the input unit; and selecting a menu by rotating the cursor or the activated-state displaying portion along the menu list based on a signal generated by the detected operating key.

34. A menu display method of a mobile terminal, comprising:
selecting one of first menus by rotating the first menus based on an input signal generated by an input unit;
executing the selected menu;
selecting one of second menus by rotating the second menus, as submenus associated with the executed first menu; and
executing the selected second menu.

35. The menu display method of a mobile terminal of claim 34, wherein the selecting the first menu or the second menu comprises checking whether an input signal for a menu selection is generated or not; and selecting a menu by rotating the first menus or the second menus by the input signal.

36. The menu display method of a mobile terminal of claim 34, wherein the selecting the first menu comprises detecting an operating key that has generated an input signal to the input unit; and selecting a first menu by rotating the first menus according to the signal generated by the detected operating key.

37. The menu display method of a mobile terminal of claim 34, wherein further comprising: outputting information about the selected first menu and/or the second menu on a selected menu display area.

38. A menu display method of a mobile terminal, comprising:
selecting one of first menus by rotating a cursor or an activated-state displaying portion along the first menus based on an input signal generated by an input unit;
executing the selected first menu;
selecting one of second menus by rotating the cursor or the activated-state displaying portion along the second menus as submenus associated with the selected first menu; and
executing the selected second menu.

39. The menu display method of a mobile terminal of claim 38, wherein the selecting the first menu or the second menu comprises checking whether an input signal for a menu selection is generated or not; and selecting a menu by rotating the cursor or the activated-state displaying portion along the first menus or the second menus by the input signal.

40. The menu display method of a mobile terminal of claim 38, wherein the selecting the first menu comprises detecting an operating key that has generated an input signal to the input unit; and selecting a first menu by rotating the cursor or the activated-state displaying portion along the first menus based on the signal generated by the detected operating key.

41. The menu display method of a mobile terminal of claim 38, wherein further comprising: outputting information about the selected first menu and/or the second menu on a selected menu display area.

42. A mobile phone comprising:
a screen to display information;
a rotary input device to receive user inputs;
a controller adapted to cooperate with the screen and the rotary input device to display multiple menu items on the screen in a circular layout with a central region to display information related to at least one of the menu items.

43. The mobile phone of claim 42, wherein the controller determines the total number of menu items to be displayed in the circular layout and performs graphical image processing such that all or some of the menu items fit in the circular layout.

44. The mobile phone of claim 43, wherein at least one of a size and shape of the menu items is adjusted based on the determined total number of menu items to be displayed such that the menu items can be seen by a user.

45. The mobile phone of claim 42, wherein the circular layout comprises:
first menu items positioned along a first diameter region of the circular layout; and
second menu items positioned along a second diameter region within the first diameter region of the circular layout.

46. The mobile phone of claim 45, wherein the first diameter region is related to higher level menu items and the second diameter region is related to lower level menu items, or the first diameter region is related to lower level menu items and the second diameter region is related to higher level menu items.

47. The mobile phone of claim 45, further comprising:
a graphical indicator that can be moved on the screen along at least one of the outer diameter region and the inner diameter regions by using the rotary input device to visually distinguish one or more menu items.

48. The mobile phone of claim 47, wherein a visually distinguished menu item can be selected by the user via at least one of the rotary input device and a different input means.

49. The mobile phone of claim 48, wherein information related to a selected menu item is displayed at the central region.

50. The mobile phone of claim 42, wherein the rotary input device comprises a rotatable element or a touch-sensitive sensor device.

51. A graphical user interface comprising:
at least one annular region to display a plurality of menu items; and
a central region within an innermost annular region to display information related to at least one of the menu items.

52. The graphical user interface of claim 51, further comprising:
an edge portion adjacent to and outside the annular region to display mobile phone operation related information related to at least one of antenna status, battery status, current time, and message receipt status.

53. The graphical user interface of claim 51, wherein each annular region is comprised of sectors, with each sector containing one menu item icon therein.

54. The graphical user interface of claim 51, wherein the at least one annular region comprises an outer annular region comprising menu items of a first hierarchy and an inner annular region comprising menu items of a second hierarchy.

55. The graphical user interface of claim 51, further comprising:
a graphical cursor element displayed on at least one of the annular region and the central portion.

56. The graphical user interface of claim 55, wherein at least one of the menu items and the graphical cursor element are moveable relative to each other via a user input command.
